(19) Europäisches Patentamt

European Patent Office

Office européen des brevets

(11) **EP 4 614 116 A1**

(12) **EUROPEAN PATENT APPLICATION**

(43) Date of publication:
**10.09.2025 Bulletin 2025/37**

(21) Application number: **25159664.9**

(22) Date of filing: **24.02.2025**

(51) International Patent Classification (IPC):
*G01F 1/692* (2006.01)

(52) Cooperative Patent Classification (CPC):
**G01F 1/692**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **08.03.2024 JP 2024035938**

(71) Applicant: **Surpass Industry Co., Ltd.
Gyoda-shi
Saitama 361-0037 (JP)**

(72) Inventors:
• **Nakajima, Koji
Saitama, 361-0037 (JP)**
• **SHIBATA, Taku
Saitama, 361-0037 (JP)**

(74) Representative: **RGTH
Patentanwälte PartGmbB
Neuer Wall 10
20354 Hamburg (DE)**

(54) **THERMAL FLOW METER AND FLOW RATE CALCULATION METHOD**

(57)     Provided is a flow rate calculation method including: a time measurement step S103, S104 of measuring a first reach time T1 taken by a liquid heated by a heating resistance element to reach a first temperature detecting resistance element and measuring a second reach time T2 taken by a liquid heated by the heating resistance element to reach a second temperature detecting resistance element; and a calculation step S108, S110, S111 of calculating a liquid flow rate of a liquid flowing through a measurement tube based on the first reach time T1 and the second reach time T2. The calculation step includes calculating the liquid flow rate based on both the first reach time T1 and the second reach time T2 when a first flow rate FL1 is greater than a first predetermined flow rate and calculating the liquid flow rate based on the first reach time T1 without using the second reach time T2 when the first flow rate FL1 is less than or equal to the first predetermined flow rate.

FIG. 7

**Description**

BACKGROUND

1. TECHNICAL FIELD

The present invention relates to a thermal flow meter and a flow rate calculation method.

2. DESCRIPTION OF RELATED ART

Conventionally, there are thermal flow meters having a temperature detection substrate in which a heating resistance element and a temperature detecting resistance element are formed on a detection surface along an axis and configured to calculate a liquid flow rate based on a time difference between the time of heating the liquid by the heating resistance element and the time of detecting the heated liquid by the temperature detecting resistance element (for example, Japanese Patent Application Laid-Open No. 2021-131323).

Japanese Patent Application Laid-Open No. 2021-131323 discloses that the control substrate calculates the flow speed of a liquid flowing through a measurement tube based on the time of instantaneously heating a heating resistance element and the time of two temperature detecting resistance elements then determining the temperature of the heated liquid and calculates the liquid flow rate based on the flow speed and the sectional area of the measurement tube.

The thermal flow meter disclosed in Japanese Patent Application Laid-Open No. 2021-131323 has a first temperature detecting resistance element arranged downstream from the heating resistance element in the flow direction of a liquid and has a second temperature detecting resistance element arranged further downstream from the first temperature detecting resistance element. When the thermal flow meter disclosed in Japanese Patent Application Laid-Open No. 2021-131323 is used, for example, a first flow rate is calculated based on the time of instantaneously heating the heating resistance element and the time of determining the temperature of the heated liquid by the first temperature detecting resistance element, a second flow rate is calculated based on the time of instantaneously heating the heating resistance element and the time of determining the temperature of the heated liquid by the second temperature detecting resistance element, and the liquid flow rate can be calculated by averaging the first flow rate and the second flow rate.

When the liquid flow rate of a liquid flowing through the measurement tube is relatively large, the temperature difference between the temperature of the heated liquid reaching the first temperature detecting resistance element and the temperature of the heated liquid reaching the second temperature detecting resistance element is small, and the first flow rate and the second flow rate are substantially the same values. Thus, it is possible to suitably calculate the liquid flow rate by averaging the first flow rate and the second flow rate.

When the liquid flow rate of a liquid flowing through the measurement tube is relatively small, the temperature of the heated liquid reaching the second temperature detecting resistance element is lower than the temperature of the heated liquid reaching the first temperature detecting resistance element, and it is not possible to suitably calculate the liquid flow rate based on the first flow rate and the second flow rate. This is because, when the liquid flow rate is relatively small, the heat applied to the liquid from the heating resistance element is transferred to the measurement tube or the liquid itself before reaching the second temperature detecting resistance element.

The present invention has been made in view of such circumstances and intends to provide a thermal flow meter and a flow rate calculation method that can reduce a calculation error in the flow rate occurring when the liquid flow rate is relatively small and thereby expand the measurable flow rate range on the lower limit value side.

BRIEF SUMMARY

The present invention employs the following solutions in order to achieve the above object.

A thermal flow meter according to one aspect of the present invention includes: a measurement tube having an inlet and an outlet, a liquid flowing in the inlet and the liquid, which flowed in from the inlet, flowing out of the outlet, and having an internal flow passage extending along an axis formed in the measurement tube; a temperature detection substrate having a heating resistance element, a first temperature detecting resistance element, and a second temperature detecting resistance element that are formed on a detection surface, each extend in a flow direction from the inlet to the outlet, and are spaced apart from each other; a voltage output unit configured to output a voltage signal to the temperature detection substrate, the voltage signal being for heating the heating resistance element; a voltage detection unit configured to determine a first output voltage in accordance with a temperature of the first temperature detecting resistance element and a second output voltage in accordance with a temperature of the second temperature detecting resistance element; a time measurement unit configured to measure a first reach time based on the voltage signal and the first output voltage and measure a second reach time based on the voltage signal and the second output voltage, the first reach time being a time taken by a liquid heated by the heating resistance element to reach the first temperature detecting resistance element, and the second reach time being a time taken by a liquid heated by the heating resistance element to reach the second temperature detecting resistance element; and a calculation unit configured to calculate a liquid flow rate of a liquid flowing through the measurement tube based on the first reach time and the second reach time, and the calculation unit calculates the liquid flow rate based on both the first reach time and the second reach time when the liquid flow rate is greater than a first predetermined flow rate, and the calculation unit calculates the liquid flow rate based on the first reach time without using the second reach time when the liquid flow rate is less than or equal to the first predetermined flow rate.

According to the thermal flow meter of one aspect of the present invention, when the liquid flow rate is greater than the first predetermined flow rate, the liquid flow rate is calculated based on both the first reach time and the second reach time. Thus, the error in calculation of the flow rate can be reduced compared to a case where the flow rate is calculated without the use of either one of the first reach time and the second reach time.

Further, according to the thermal flow meter of one aspect of the present invention, when the liquid flow rate is less than or equal to the first predetermined flow rate, the liquid flow rate is calculated based on the first reach time without the use of the second reach time. Thus, the calculation error of the liquid flow rate due to heat applied to a liquid from the heating resistance element being transferred to the measurement tube or the liquid itself before reaching the second temperature detecting resistance element can be reduced. Therefore, according to the thermal flow meter of one aspect of the present invention, the calculation error in the flow rate occurring when the liquid flow rate is relatively small can be reduced, and thereby the measurable flow rate range can be expanded on the lower limit value side.

The thermal flow meter according to one aspect of the present invention may be configured such that the calculation unit calculates a liquid flow rate by applying an equal weight to a first flow rate calculated based on the first reach time and to a second flow rate calculated based on the second reach time when the liquid flow rate is greater than a second predetermined flow rate, which is greater than the first predetermined flow rate, and the calculation unit calculates a liquid flow rate by increasing a weight on the first flow rate to be greater than a weight on the second flow rate when the liquid flow rate is greater than the first predetermined flow rate and less than or equal to the second predetermined flow rate.

According to the thermal flow meter of the present configuration, when the liquid flow rate is greater than the second predetermined flow rate, the liquid flow rate is calculated with an equal weight being applied to the first flow rate calculated based on the first reach time and the second flow rate calculated based on the second reach time. Thus, the error in calculation of the flow rate can be reduced compared to a case where the flow rate is calculated based only on either one of the first flow rate calculated based on the first reach time and the second flow rate calculated based on the second reach time.

Further, according to the thermal flow meter of the present configuration, when the liquid flow rate is greater than the first predetermined flow rate and less than or equal to the second predetermined flow rate, the liquid flow rate is calculated with the weight on the first flow rate being increased to be greater than the weight on the second flow rate. Thus, the calculation error of the liquid flow rate due to heat applied to a liquid from the heating resistance element being transferred to the measurement tube or the liquid itself before reaching the second temperature detecting resistance element can be reduced.

The thermal flow meter of the above configuration may be formed such that, as the liquid flow rate calculated by the calculation unit decreases from the second predetermined flow rate to the first predetermined flow rate, the calculation unit calculates the liquid flow rate by gradually increasing the weight on the first flow rate at a constant increase rate and by gradually reducing the weight on the second flow rate at a constant reduction rate.

According to the thermal flow meter of the present form, since the weight on the first flow rate is gradually increased at a constant increase rate and the weight on the second flow rate is gradually reduced at a constant reduction rate as the liquid flow rate calculated by the calculation unit decreases and is closer to the first predetermined flow rate from the second predetermined flow rate, fluctuation in the calculation result of the flow rate can be suitably suppressed.

The thermal flow meter according to one aspect of the present invention may be configured such that the calculation unit calculates the liquid flow rate by applying predetermined weights to a first flow rate calculated based on the first reach time and to a second flow rate calculated based on the second reach time when a liquid flow rate is greater than the first predetermined flow rate, and the calculation unit calculates the liquid flow rate by increasing a weight on the first flow rate to be greater than the predetermined weights when the liquid flow rate is less than or equal to the first predetermined flow rate.

According to the thermal flow meter of the present configuration, when the liquid flow rate is less than or equal to the first predetermined flow rate, the liquid flow rate is calculated with the weight on the first flow rate being increased to be greater than the predetermined weight. Thus, the calculation error of the liquid flow rate due to heat applied to a liquid from the heating resistance element being transferred to the measurement tube or the liquid itself before reaching the second temperature detecting resistance element can be reduced. Therefore, according to the thermal flow meter of one aspect of the present invention, the calculation error in the flow rate occurring when the liquid flow rate is relatively small can be reduced, and thereby the measurable flow rate range can be expanded on the lower limit value side.

A flow rate calculation method according to one aspect of the present invention is a flow rate calculation method for calculating a liquid flow rate by a thermal flow meter, the thermal flow meter has a measurement tube having an inlet and an outlet, a liquid flowing in the inlet and the liquid, which flowed in from the inlet, flowing out of the outlet, and having an internal flow passage extending along an axis formed in the measurement tube, a temperature detection substrate having a heating resistance element, a first temperature detecting resistance element, and a second temperature detecting resistance element that are formed on a detection surface, each extend in a flow direction from the inlet to the outlet, and are spaced apart from each other, a voltage output unit configured to output a voltage signal to the temperature detection substrate, the voltage signal being for heating the heating resistance element, and a voltage detection unit configured to determine a first output voltage in accordance with a temperature of the first temperature detecting resistance element and a second output voltage in accordance with a temperature of the second temperature detecting resistance element, the flow rate calculation method includes: a time measurement step of measuring a first reach time based on the voltage signal and the first output voltage and measuring a second reach time based on the voltage signal and the second output voltage, the first reach time being a time taken by a liquid heated by the heating resistance element to reach the first temperature detecting resistance element, and the second reach time being a time taken by a liquid heated by the heating resistance element to reach the second temperature detecting resistance element; and a calculation step of calculating a liquid flow rate of a liquid flowing through the measurement tube based on the first reach time and the second reach time, and the calculation step includes calculating the liquid flow rate based on both the first reach time and the second reach time when the liquid flow rate is greater than a first predetermined flow rate and calculating the liquid flow rate based on the first reach time without using the second reach time when the liquid flow rate is less than or equal to the first predetermined flow rate.

According to the flow rate calculation method of one aspect of the present invention, when the liquid flow rate is greater than the first predetermined flow rate, the liquid flow rate is calculated based on both the first reach time and the second reach time. Thus, the error in calculation of the flow rate can be reduced compared to a case where the flow rate is calculated without the use of either one of the first reach time and the second reach time.

Further, according to the flow rate calculation method according to one aspect of the present invention, when the liquid flow rate is less than or equal to the first predetermined flow rate, the liquid flow rate is calculated based on the first reach time without the use of the second reach time. Thus, the calculation error of the liquid flow rate due to heat applied to a liquid from the heating resistance element being transferred to the measurement tube or the liquid itself before reaching the second temperature detecting resistance element can be reduced. Therefore, according to the flow rate calculation method of one aspect of the present invention, the calculation error in the flow rate occurring when the liquid flow rate is relatively small can be reduced.

The flow rate calculation method according to one aspect of the present invention may be configured such that the calculation step includes calculating the liquid flow rate by applying predetermined weights to a first flow rate calculated based on the first reach time and to a second flow rate calculated based on the second reach time when a liquid flow rate is greater than the first predetermined flow rate and calculating the liquid flow rate by increasing a weight on the first flow rate to be greater than the predetermined weights when the liquid flow rate is less than or equal to the first predetermined flow rate.

According to the flow rate calculation method of the present configuration, when the liquid flow rate is less than or equal to the first predetermined flow rate, the liquid flow rate is calculated with the weight on the first flow rate being increased to be greater than the predetermined weight. Thus, the calculation error of the liquid flow rate due to heat applied to a liquid from the heating resistance element being transferred to the measurement tube or the liquid itself before reaching the second temperature detecting resistance element can be reduced. Therefore, according to the flow rate calculation method of one aspect of the present invention, the calculation error in the flow rate occurring when the liquid flow rate is relatively small can be reduced.

According to the present invention, it is possible to provide a thermal flow meter and a flow rate calculation method that can reduce a calculation error in the flow rate occurring when the liquid flow rate is relatively small and thereby expand the measurable flow rate range on the lower limit value side.

BRIEF DESCRIPTION OF THE SEVERAL VIEWS OF THE DRAWINGS

Fig. 1 is a longitudinal sectional view of a thermal flow meter according to one embodiment of the present invention.
Fig. 2 is a partial enlarged view of a sensor unit illustrated in Fig. 1.
Fig. 3 is an arrow A-A end face view of the sensor unit illustrated in Fig. 2.
Fig. 4 is a plan view of a sensor substrate illustrated in Fig. 3 when viewed from the detection surface side.
Fig. 5 is a block diagram illustrating a control configuration of a control substrate illustrated in Fig. 1.
Fig. 6 is a graph illustrating a relationship between the liquid flow rate calculated by a calculation unit and amplitudes of a first differential voltage and a second differential voltage.
Fig. 7 is a flowchart illustrating a flow rate calculation method for calculating a liquid flow rate performed by the thermal flow meter according to one embodiment of the present invention.

Fig. 8 is a graph illustrating a relationship between the liquid flow rate calculated by the calculation unit and a first coefficient and a second coefficient used in calculation formulae.

Fig. 9 is a graph illustrating a modified example of the relationship between the liquid flow rate calculated by the calculation unit and the first coefficient and the second coefficient used in the calculation formulae.

DETAILED DESCRIPTION

A thermal flow meter 100 according to one embodiment of the present invention will be described below with reference to the drawings.

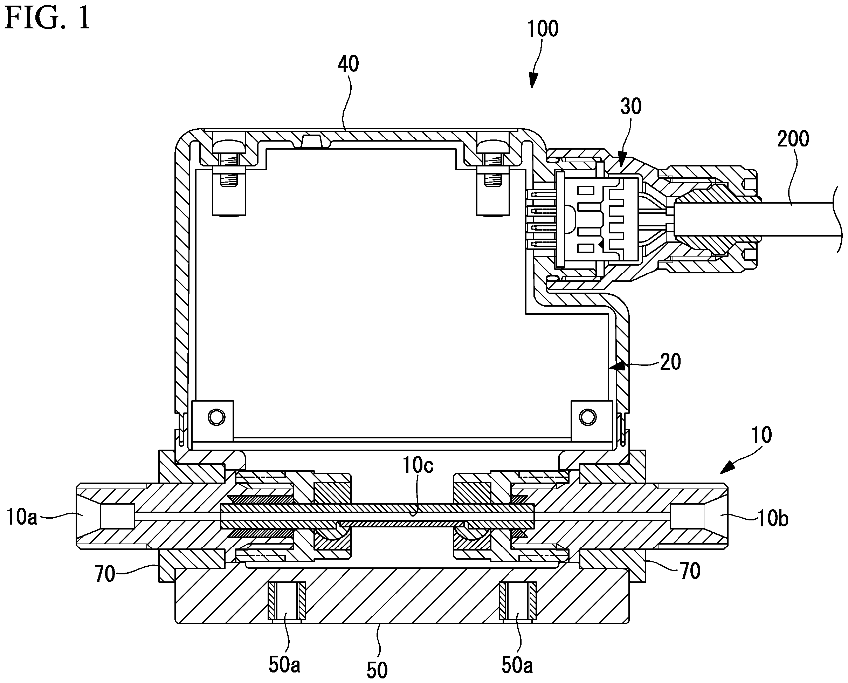

Fig. 1 is a longitudinal sectional view of the thermal flow meter 100 according to one embodiment of the present invention.

The thermal flow meter 100 of the present embodiment is a thermal flow meter that heats a liquid flowing through an internal flow passage, determines the temperature of the heated liquid, and thereby measures the liquid flow rate. The thermal flow meter 100 of the present embodiment is suitable for measuring a micro-flow rate from 4 μL/min to 350 μL/min, for example. As illustrated in Fig. 1, the thermal flow meter 100 of the present embodiment has a sensor unit 10, a control substrate 20, a relay substrate 30, an upper case 40, and a bottom case 50.

As illustrated in Fig. 1, the sensor unit 10 causes a liquid flowing in from an inlet 10a connected to an external pipe (not illustrated) to flow out of an outlet 10b connected to an external pipe (not illustrated), heats the liquid flowing through an internal flow passage 10c, and outputs a voltage in accordance with the temperature of the heated liquid to the control substrate 20. The sensor unit 10 will be described later in detail.

The control substrate 20 is a device that outputs a voltage signal used for heating a liquid to the sensor unit 10, receives a voltage signal in accordance with the temperature of the heated liquid from the sensor unit 10, and calculates the liquid flow rate of the liquid flowing through the sensor unit 10. The control substrate 20 will be described later in detail.

The relay substrate 30 that relays various signals transmitted and received between the control substrate 20 and an external device (not shown). A cable 200 for transmitting and receiving the various signals to and from the external device (not shown) is connected to the relay substrate 30.

The upper case 40 serves as a housing for an upper portion of the thermal flow meter 100, and accommodates the control substrate 20 inside.

The bottom case 50 serves as a housing for a lower portion of the thermal flow meter 100, and accommodate the sensor unit 10 inside. With the sensor unit 10 inserted in the bottom case 50, a stopper 70 is inserted between the bottom case 50 and the sensor unit 10 from the inlet 10a side of the sensor unit 10.

Similarly, with the sensor unit 10 inserted in the bottom case 50, the stopper 70 is inserted between the bottom case 50 and the sensor unit 10 from the outlet 10b side of the sensor unit 10. The sensor unit 10 becomes fixed to the bottom case 50 by means of the stopper 70.

The bottom case 50 has fastening holes 50a on its bottom surface and is fixed to an installation surface (not shown) by fastening bolts (not shown) that are inserted from below the installation surface.

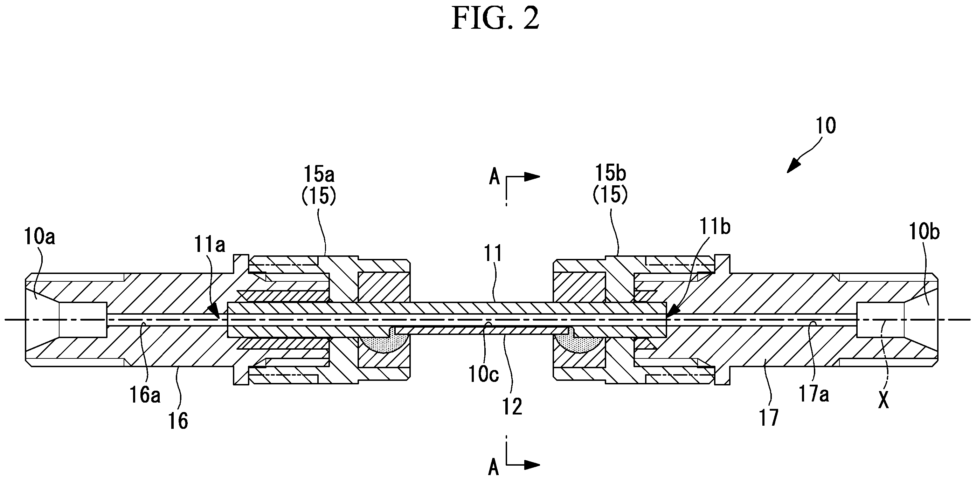

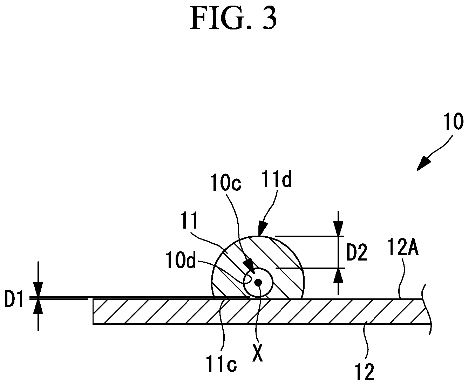

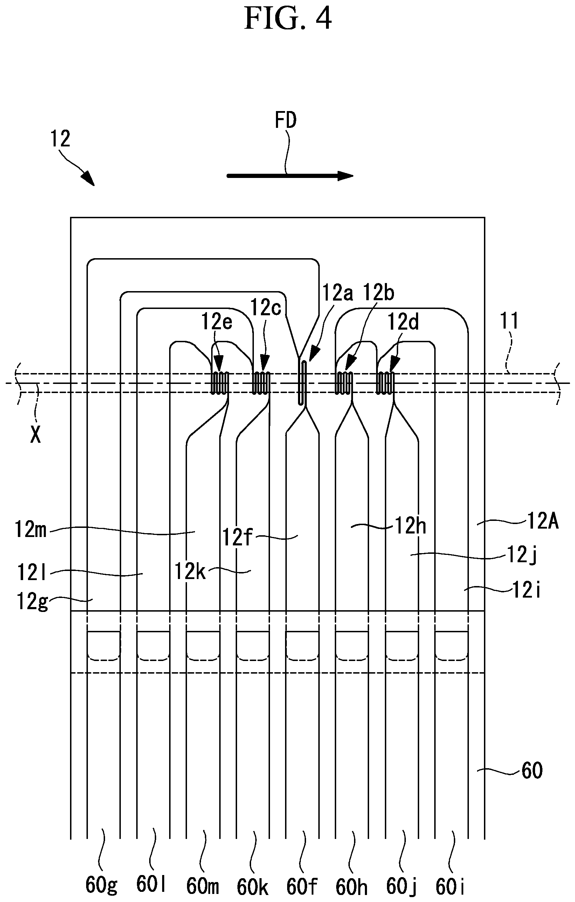

Next, the sensor unit 10 will be described in detail with reference to Figs. 2 to 4. Fig. 2 is a partial enlarged view of a sensor unit illustrated in Fig. 1. Fig. 3 is an arrow A-A end face view of the sensor unit illustrated in Fig. 2. Fig. 4 is a plan view of a sensor substrate illustrated in Fig. 3 when viewed from the detection surface side.

As shown in Fig. 2, the sensor unit 10 has a measurement tube 11, a sensor substrate 12 (temperature detecting substrate), a nut 15, an inlet-side body 16, and an outlet-side body 17.

The measurement tube 11 is a tube including an inlet 11a through which liquid enters and an outlet 11b through which the liquid flowing from the inlet 11a exits. As shown in Fig. 3, the measurement tube 11 includes the internal flow passage 10c extending along an axis X and having a circular cross section. The measurement tube 11 is, for example, made of glass (such as quartz glass with high silicon dioxide content). Furthermore, the measurement tube 11 may be a tube element having the corrosion resistance to alkaline liquids.

As shown in Fig. 4, the sensor substrate 12 is a substrate made of glass (e.g., made of quartz glass having a high silicon dioxide content) with the temperature detecting resistance wire 12e, the temperature detecting resistance wire 12c, the heating resistance wire (the heating resistance element) 12a, the temperature detecting resistance wire (the first temperature detecting resistance element) 12b and the temperature detecting resistance wire (the second temperature detecting resistance element) 12d spaced along the liquid distribution direction FD and formed on the detection surface 12A.

The detection surface 12A is a flatly formed surface extending along the axis X. The heating resistance wire 12a, and the temperature detecting resistance wire 12b, 12c, 12d, 12e are each formed of a metal film, such as of platinum, evaporated onto the glass substrate.

The liquid flowing through the measurement tube 11 flows along the axis X in a flow direction FD from the left toward the right in Fig. 4. Accordingly, when the heating resistance wire 12a is heated momentarily, the heated liquid flows along the axis X to a position of the temperature detecting resistance wire 12b and then to a position of the temperature detecting resistance wire 12d. The control substrate 20 detects voltage signals corresponding to electrical resistance values of the temperature detecting resistance wire 12b and the temperature detecting resistance wire 12d that change with temperature, to measure temperatures of the temperature detecting resistance wire 12b and the temperature detecting resistance wire 12d.

A middle position of the sensor substrate 12 in a direction of an axis X is on an outlet 11b side of an intermediate position at an equal distance from both the inlet 11a and the outlet 11b of the measurement tube 11. Furthermore, a position where the heating resistance wire 12a is disposed in the sensor substrate 12 is on the outlet 11b side of an intermediate position at an equal distance from both an inlet 11a side end portion of the sensor substrate 12 and an outlet 11b side end portion of the sensor substrate 12.

A distance from the inlet 11a of the measurement tube 11 to the heating resistance wire 12a on the axis X is longer than a distance from the outlet 11b of the measurement tube 11 to the heating resistance wire 12a on the axis X. Consequently, the distance from the inlet 11a of the measurement tube 11 to the heating resistance wire 12a can be increased, and turbulence or the like of the liquid flowing into the inlet 11a of the measurement tube 11 can be sufficiently reduced before the liquid is heated.

As shown in Fig. 4, in the detection surface 12A, a wiring pattern 12f connected to one end of the heating resistance wire 12a and a wiring pattern 12g connected to the other end of the heating resistance wire 12a are formed. Also, in the detection surface 12A, a wiring pattern 12h connected to one end of the temperature detecting resistance wire 12b, a wiring pattern 12i connected to the other end of the temperature detecting resistance wire 12b and a wiring pattern 12j connected to one end of the temperature detecting resistance wire 12d are formed. The other end of the temperature detecting resistance wire 12d is connected to the wiring pattern 12i.

Also, in the detection surface 12A, a wiring pattern 12k connected to one end of the temperature detecting resistance wire 12c, a wiring pattern 12l connected to the other end of the temperature detecting resistance wire 12c and a wiring pattern 12m connected to one end of the temperature detecting resistance wire 12e are formed. The other end of the temperature detecting resistance wire 12e is connected to the wiring pattern 12l. The wiring patterns 12f, 12g, 12h, 12i, 12j, 12k, 12l, 12m are each formed of a metal film, such as of platinum, evaporated onto the glass substrate.

End portions of the wiring patterns 12f, 12g, 12h, 12i, 12j, 12k, 12l, 12m are joined to metal wiring patterns 60f, 60g, 60h, 60i, 60j, 60k, 60l, 60m arranged in the flexible substrate (the external connection terminal) 60 formed of film resin, respectively. Each of the wiring patterns 60f, 60g, 60h, 60i, 60j, 60k, 60l, 60m of the flexible substrate 60 is electrically connected to the control substrate 20.

As shown in Fig. 3, the measurement tube 11 has an almost circular upper side of a cross section defined by a plane orthogonal to the axis X at a position to which the sensor substrate 12 is bonded. A part of an outer circumferential surface of the measurement tube 11 that is disposed as opposed to the detection surface 12A of the sensor substrate 12 is the flat surface 11c that is flat. On the other hand, the measurement tube 11 has a circular cross section defined by the plane orthogonal to the axis X at a position of the tube to which the sensor substrate 12 is not bonded. The flat surface 11c of the measurement tube 11 is disposed as opposed to the detection surface 12A of the sensor substrate 12. The detection surface 12A is bonded with the adhesive 80 to the flat surface 11c of the measurement tube 11 along the axis X.

A distance D1 from the detection surface 12A of the sensor substrate 12 to an inner circumferential surface 10d of the internal flow passage 10c is shorter than a distance D2 from a top 11d of the measurement tube 11 to the inner circumferential surface 10d of the internal flow passage 10c. Thus, the distance D1 from the detection surface 12A of the sensor substrate 12 to the inner circumferential surface 10d of the internal flow passage 10c is shorter than the distance D2, to improve thermal conductivity from the heating resistance wire 12a to the liquid and to improve properties of the temperature detecting resistance wire 12b and the temperature detecting resistance wire 12d to detect the temperatures. The distance D1 is preferably 0.2 mm or less.

As shown in Fig. 2, the inlet-side body 16 receives the inlet 11a of the measurement tube 11 and has inside a connection flow passage 16a that has a circular cross section. The outlet-side body 17 receives the outlet 11b of the measurement tube 11 and has inside a connection flow passage 17a that has a circular cross section.

The nuts 15 include the inlet-side nut 15a attached to the inlet-side body 16 and the outlet-side nut 15b attached to the outlet-side body 17. The inlet-side nut 15a is a cylindrical member fitted along the outer circumferential surface of the measurement tube 11 to be closer to the outlet 11b than the inlet-side body 16.

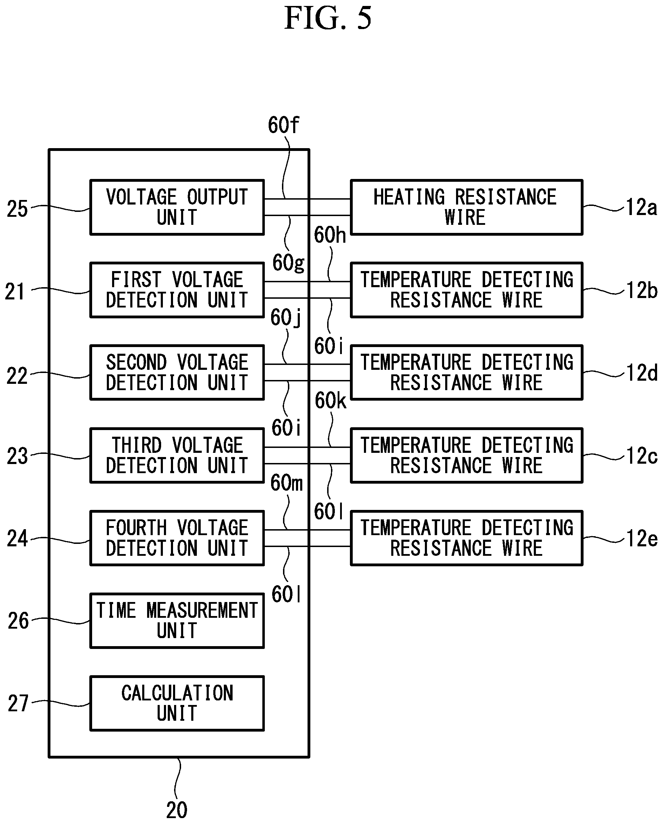

Next, the control substrate 20 will be described in detail with reference to Fig. 5. Fig. 5 is a block diagram illustrating a control configuration of the control substrate 20 illustrated in Fig. 1. As illustrated in Fig. 5, the control substrate 20 has a first voltage detection unit 21, a second voltage detection unit 22, a third voltage detection unit 23, a fourth voltage detection unit 24, a voltage output unit 25, a time measurement unit 26, and a calculation unit 27.

The voltage output unit 25 outputs a voltage signal used for heating a heating resistance wire 12a to the sensor substrate 12 via the wiring patterns 60f, 60g of the flexible substrate 60. The voltage output unit 25 outputs a voltage signal to the heating resistance wire 12a so as to periodically repeat a heating period for heating the heating resistance wire 12a and a non-heating period for not heating the heating resistance wire 12a.

For example, the voltage output unit 25 outputs a voltage signal so that the heating period is shorter than the non-heating period. The heating period is set to a ratio less than 0.5 in a single cycle that is a sum of a heating period and a non-heating period. The ratio in a single cycle of the heating period may be set to be less than 0.4.

The first voltage detection unit 21 determines a first output voltage Vo1 in accordance with the temperature of the temperature detecting resistance wire 12b. The first voltage detection unit 21 supplies current at a constant current value to the temperature detecting resistance wire 12b and determines the first output voltage Vo1 in accordance with the resistance value of the temperature detecting resistance wire 12b that varies with the temperature.

The second voltage detection unit 22 determines a second output voltage Vo2 in accordance with the temperature of the temperature detecting resistance wire 12d. The second voltage detection unit 22 supplies current at a constant current value to the temperature detecting resistance wire 12d and determines the second output voltage Vo2 in accordance with the resistance value of the temperature detecting resistance wire 12d that varies with the temperature.

The third voltage detection unit 23 determines a third output voltage Vo3 in accordance with the temperature of the temperature detecting resistance wire 12c. The third voltage detection unit 23 supplies current at a constant current value to the temperature detecting resistance wire 12c and determines the third output voltage Vo3 in accordance with the resistance value of the temperature detecting resistance wire 12c that varies with the temperature.

The fourth voltage detection unit 24 determines a fourth output voltage Vo4 in accordance with the temperature of the temperature detecting resistance wire 12e. The fourth voltage detection unit 24 supplies current at a constant current value to the temperature detecting resistance wire 12e and determines the fourth output voltage Vo4 in accordance with the resistance value of the temperature detecting resistance wire 12e that varies with the temperature.

The time measurement unit 26 measures a first reach time T1, which is taken by a liquid heated by the heating resistance wire 12a to reach the first temperature detecting resistance wire 12b, based on a voltage signal output by the voltage output unit 25 and the first output voltage Vo1 determined by the first voltage detection unit 21. Further, the time measurement unit 26 measures a second reach time T2, which is taken by a liquid heated by the heating resistance wire 12a to reach the second temperature detecting resistance wire 12d, based on a voltage signal output by the voltage output unit 25 and the second output voltage Vo2 determined by the second voltage detection unit 22.

Note that, when measuring the first reach time T1, it is preferable for the time measurement unit 26 to measure the first reach time T1 based on a first differential voltage DV1 (Vo1 - Vo3) obtained by subtracting the third output voltage Vo3 determined by the third voltage detection unit 23 from the first output voltage Vo1 determined by the first voltage detection unit 21. This can eliminate the effect due to heat that is not transferred to the liquid but transferred to the temperature detecting resistance wire 12c via the measurement tube 11 out of the heat transferred to the measurement tube 11 by the heating resistance wire 12a and thus can improve the measurement accuracy.

The temperature detecting resistance wire 12b and the temperature detecting resistance wire 12c are arranged at the same distance from the heating resistance wire 12a. The third output voltage Vo3 determined by the temperature detecting resistance wire 12c upstream in the flow direction FD of the heating resistance wire 12a corresponds to the heat that is not transferred to the liquid but transferred to the temperature detecting resistance wire 12b via the measurement tube 11 out of the heat transferred to the measurement tube 11 by the heating resistance wire 12a. Therefore, by measuring the first reach time T1 based on the first differential voltage DV1, it is possible to eliminate the effect due to the heat transferred to the temperature detecting resistance wire 12c via the measurement tube 11.

Similarly, when measuring the second reach time T2, it is preferable for the time measurement unit 26 to measure the second reach time T2 based on a second differential voltage DV2 (Vo2 - Vo4) obtained by subtracting the fourth output voltage Vo4 determined by the fourth voltage detection unit 24 from the second output voltage Vo2 determined by the second voltage detection unit 22. This can eliminate the effect due to heat that is not transferred to the liquid but transferred to the temperature detecting resistance wire 12d via the measurement tube 11 out of the heat transferred to the measurement tube 11 by the heating resistance wire 12a and thus can improve the measurement accuracy.

The temperature detecting resistance wire 12d and the temperature detecting resistance wire 12e are arranged at the same distance from the heating resistance wire 12a. The fourth output voltage Vo4 determined by the temperature detecting resistance wire 12e upstream in the flow direction FD of the heating resistance wire 12a corresponds to the heat that is not transferred to the liquid but transferred to the temperature detecting resistance wire 12d via the measurement tube 11 out of the heat transferred to the measurement tube 11 by the heating resistance wire 12a. Therefore, by measuring the second reach time T2 based on the second differential voltage DV2, it is possible to eliminate the effect due to the heat transferred to the temperature detecting resistance wire 12d via the measurement tube 11.

For example, the time measurement unit 26 performs Fourier transform on time-series signals of the first differential voltage DV1 and calculates the first reach time T1 based on a coefficient of the fundamental wave (a sinewave of the same frequency as the voltage signal output by the voltage output unit 25) resulted after the Fourier transform. Further, for example, the time measurement unit 26 performs Fourier transform on time-series signals of the second differential voltage DV2 and calculates the second reach time T2 based on a coefficient of the fundamental wave resulted after the Fourier transform.

For example, the time measurement unit 26 performs Fourier transform on time-series signals of the first differential voltage DV1 and calculates the amplitude VA1 of the fundamental wave resulted after the Fourier transform. The amplitude VA1 is a value in accordance with a heat quantity of a liquid transferred to the temperature detecting resistance wire 12b. Further, for example, the time measurement unit 26 performs Fourier transform on time-series signals of the second differential voltage DV2 and calculates the amplitude VA2 of the fundamental wave resulted after the Fourier transform. The amplitude VA2 is a value in accordance with a heat quantity of a liquid transferred to the temperature detecting resistance wire 12d.

The calculation unit 27 calculates the liquid flow rate of a liquid flowing through the measurement tube 11 based on the first reach time T1 and the second reach time T2 measured by the time measurement unit 26. The calculation unit 27 switches the calculation formula used for calculation of the liquid flow rate in accordance with the flow rate that is currently being calculated by the calculation unit 27. The operation performed by the calculation unit 27 to switch the calculation formula in accordance with the flow rate to calculate the liquid flow rate will be described below.

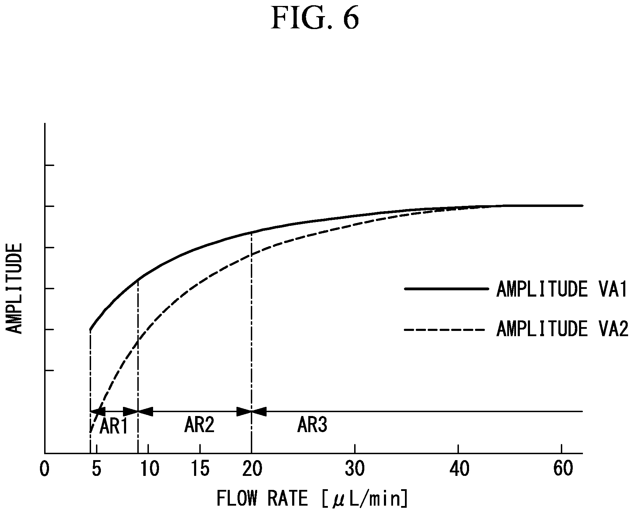

Fig. 6 is a graph illustrating a relationship between the liquid flow rate calculated by the calculation unit 27 and the amplitudes of the first differential voltage DV1 and the second differential voltage DV2. In Fig. 6, the first region AR1 is a region in which the flow rate is greater than or equal to 4 [μL/min] and less than a first predetermined flow rate PFL1 [μL/min], the second region AR2 is a region in which the flow rate is greater than or equal to the first predetermined flow rate PFL1 [μL/min] and less than a second predetermined flow rate PFL2 [μL/min], and the third region AR3 is a region in which the flow rate is greater than or equal to the second predetermined flow rate PFL2 [μL/min]. For example, the first predetermined flow rate PFL1 is 8 μL/min, and the second predetermined flow rate PFL2 is 20 μL/min. The first predetermined flow rate PFL1 and the second predetermined flow rate PFL2 may be set to any other values.

Note that the flow rate in the graph illustrated in Fig. 6 differs from the flow rate calculated by the calculation unit 27 of the present embodiment and is a flow rate measured by a different type of a calibrating flow meter (for example, a Coriolis flow meter) that can accurately measure the liquid flow rate of a liquid flowing through the internal flow passage 10c in any flow rate region of the first region AR1, the second region AR2, and the third region AR3.

As illustrated in Fig. 6, in the third region AR3 (in particular, the region of about 50 μL/min or greater), the difference is small between the amplitude VA1 of the fundamental wave of the first differential voltage DV1 resulted after Fourier transform and the amplitude VA2 of the fundamental wave of the second differential voltage DV2 resulted after Fourier transform. In the first region AR1 and the second region AR2, however, the amplitude VA1 is greater than the amplitude VA2, and the difference between the amplitude VA1 and the amplitude VA2 increases as the liquid flow rate decreases.

As described above, the reason for the increase in the difference between the amplitude VA1 and the amplitude VA2 in the first region AR1 and the second region AR2 is that, when the liquid flow rate is relatively small, heat applied to the liquid from the heating resistance wire 12a will be partially transferred to the measurement tube 11 or the liquid itself before reaching the temperature detecting resistance wire 12d. Accordingly, in the present embodiment, the calculation unit 27 switches the calculation formula used for calculation of the flow rate in accordance with whether the flow rate to be calculated by the calculation unit 27 is in the first region AR1, the second region AR2, or the third region AR3.

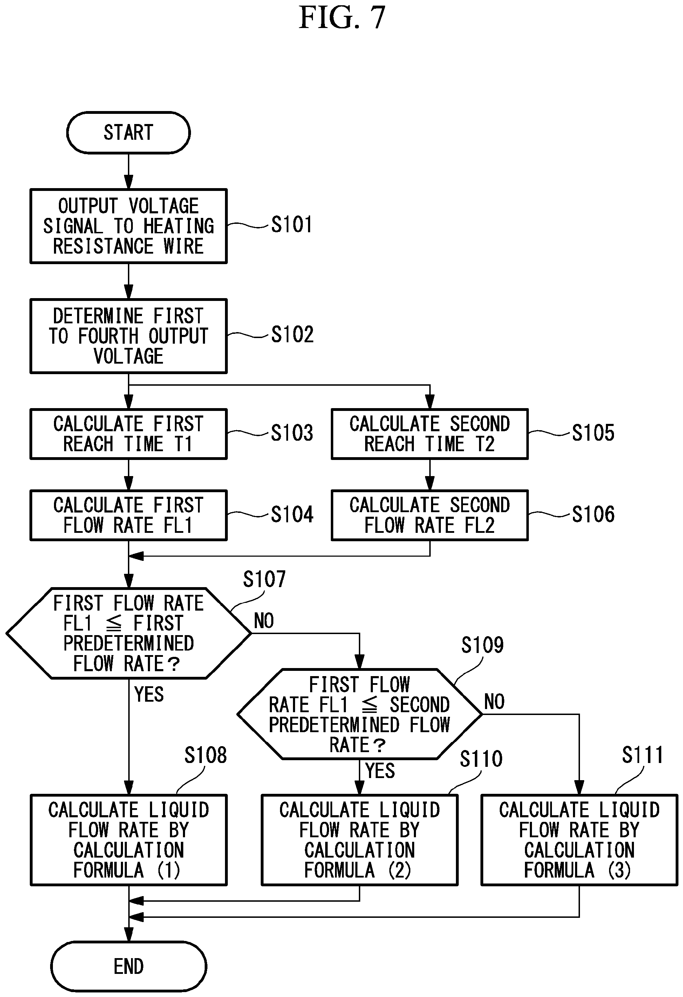

Next, a flow rate calculation method for calculating the liquid flow rate performed by the thermal flow meter 100 of the present embodiment will be described. Fig. 7 is a flowchart illustrating the flow rate calculation method for calculating the liquid flow rate performed by the thermal flow meter 100 according to one embodiment of the present invention. Each process of the flowchart illustrated in Fig. 7 is performed by a control program stored in the control substrate 20.

In step S101, the voltage output unit 25 of the control substrate 20 outputs a voltage signal to the heating resistance wire 12a to heat a liquid flowing through the measurement tube 11. The voltage output unit 25 outputs the voltage signal to the heating resistance wire 12a so as to periodically repeat a heating period for heating the heating resistance wire 12a and a non-heating period for not heating the heating resistance wire 12a.

In step S102, the first voltage detection unit 21 of the control substrate 20 determines the first output voltage Vo1 between the wiring pattern 60h and the wiring pattern 60i connected to the temperature detecting resistance wire 12b. The second voltage detection unit 22 of the control substrate 20 determines the second output voltage Vo2 between the wiring pattern 60j and the wiring pattern 60i connected to the temperature detecting resistance wire 12d. The third voltage detection unit 23 of the control substrate 20 determines the third output voltage Vo3 between the wiring pattern 60k and the wiring pattern 60l connected to the temperature detecting resistance wire 12c. The fourth voltage detection unit 24 of the control substrate 20 determines the fourth output voltage Vo4 between a wiring pattern 60m and the wiring pattern 60l connected to the temperature detecting resistance wire 12e.

In step S103, the time measurement unit 26 of the control substrate 20 performs Fourier transform on time-series signals of the first differential voltage DV1 obtained by subtracting the third output voltage Vo3 from the first output voltage Vo1 and calculates the first reach time T1 based on a coefficient of the fundamental wave (a sinewave of the same frequency as the voltage signal output by the voltage output unit 25) resulted after the Fourier transform.

In step S104, the calculation unit 27 of the control substrate 20 calculates a first flow rate FL1 of the liquid based on the first reach time T1 by using the following calculation formula (A).

$$FL1 = S \times D1/T1 \quad (A)$$

Herein, $S\,[m^2]$ is the sectional area of the internal flow passage 10c of the measurement tube 11, and D1 [m] is the distance from the heating resistance wire 12a to the temperature detecting resistance wire 12b.

Note that, instead of the above calculation formula (A), the following calculation formula (A1) may be used.

$$FL1 = a0 + a1/T1 + a2/T1^2 + a3/T1^3 + a4/T1^4 \quad (A1)$$

Herein, a0, a1, a2, a3, a4 are coefficients, respectively, and are calculated in advance based on the relationship between a plurality of flow rates measured by a calibrating flow meter and the first reach time T1. The above calculation formula (A1) is approximated by the first flow rate FL1 by a fourth order polynomial of the first reach time T1, however, may be approximated by a second order, third order, or fifth order or higher polynomial.

In step S105, the time measurement unit 26 of the control substrate 20 performs Fourier transform on time-series signals of the second differential voltage DV2 obtained by subtracting the fourth output voltage Vo4 from the second output voltage Vo2 and calculates the second reach time T2 based on a coefficient of the fundamental wave (a sinewave of the same frequency as the voltage signal output by the voltage output unit 25) resulted after the Fourier transform.

In step S106, the calculation unit 27 of the control substrate 20 calculates a second flow rate FL2 of the liquid based on the second reach time T2 by using the following calculation formula (B).

$$FL2 = S \times D2/T2 \quad (B)$$

Herein, D2 [m] is the distance from the heating resistance wire 12a to the temperature detecting resistance wire 12d.

Note that, instead of the above calculation formula (B), the following calculation formula (B1) may be used.

$$FL2 = b0 + b1/T2 + b2/T2^2 + b3/T2^3 + b4/T2^4 \quad (B1)$$

Herein, b0, b1, b2, b3, b4 are coefficients, respectively, and are calculated in advance based on the relationship between a plurality of flow rates measured by a calibrating flow meter and the second reach time T2. The above calculation formula (B1) is approximated by the second flow rate FL2 by a fourth order polynomial of the second reach time T2, however, may be approximated by a second order, third order, or fifth order or higher polynomial.

In step S107, the calculation unit 27 of the control substrate 20 determines whether or not the first flow rate FL1 calculated in step S104 is less than or equal to the first predetermined flow rate PFL1, and the calculation unit 27 proceeds with the process to step S108 if the determination is YES or proceeds with the process to step S109 if the determination is NO.

**[0084]** In step S108, step S110, and step S111, the calculation unit 27 calculates the liquid flow rate FL of the liquid by the following calculation formula (C), respectively.

$$FL = C1 \times FL1 + C2 \times FL2 \quad (C)$$

Herein, the first coefficient C1 and the second coefficient C2 are values the sum of which is 1 and, in calculation of the flow rate FL, indicate weights on the first flow rate FL1 calculated based on the first output voltage Vo1 output from the temperature detecting resistance wire 12b and the second flow rate FL2 calculated based on the second output voltage Vo2 output from the temperature detecting resistance wire 12d.

In step S108, the calculation unit 27 of the control substrate 20 calculates the liquid flow rate FL by the following calculation formula (1).

$$FL = FL1 \quad (1)$$

The above calculation formula (1) is obtained when the first coefficient C1 is 1 and the second coefficient C2 is 0 in the calculation formula (C). The calculation formula (1) is a formula in which the weight on the flow rate that is calculated based on the second output voltage Vo2 output from the temperature detecting resistance wire 12d is 0.

In step S109, the calculation unit 27 of the control substrate 20 determines whether or not the latest calculated liquid flow rate is less than or equal to the second predetermined flow rate PFL2, and the calculation unit 27 proceeds with the process to step S110 if the determination is YES or proceeds with the process to step S111 if the determination is NO.

[0089] In step S110, the calculation unit 27 of the control substrate 20 calculates the liquid flow rate FL by the following calculation formula (2).

$$FL = C1 \times FL1 + C2 \times FL2 \quad (2)$$

The above calculation formula (2) is obtained when respective values of the first coefficient C1 and the second coefficient C2 are greater than 0 and less than 1 in the calculation formula (A). The calculation formula (2) is a formula that applies weights to the flow rate calculated based on the first output voltage Vo1 output from the temperature detecting resistance wire 12b and the flow rate calculated based on the second output voltage Vo2 output from the temperature detecting resistance wire 12d, respectively.

In step S111, the calculation unit 27 of the control substrate 20 calculates the liquid flow rate FL by the following calculation formula (3).

$$FL = 0.5 \times FL1 + 0.5 \times FL2 \quad (3)$$

The above calculation formula (3) is obtained when the first coefficient C1 and the second coefficient C2 are 0.5, respectively. The calculation formula (3) is a formula that applies an equal weight to the flow rate calculated based on the first output voltage Vo1 output from the temperature detecting resistance wire 12b and the flow rate calculated based on the second output voltage Vo2 output from the temperature detecting resistance wire 12d, respectively.

Once calculating the liquid flow rates FL in step S108, step S110, and step S111, the control substrate 20 transmits an output signal indicating the calculated flow rate FL to an external device via the relay substrate 30 and ends the process of the present flowchart. The control substrate 20 continuously calculates the liquid flow rate FL by repeatedly performing the above process of step S101 to step S111.

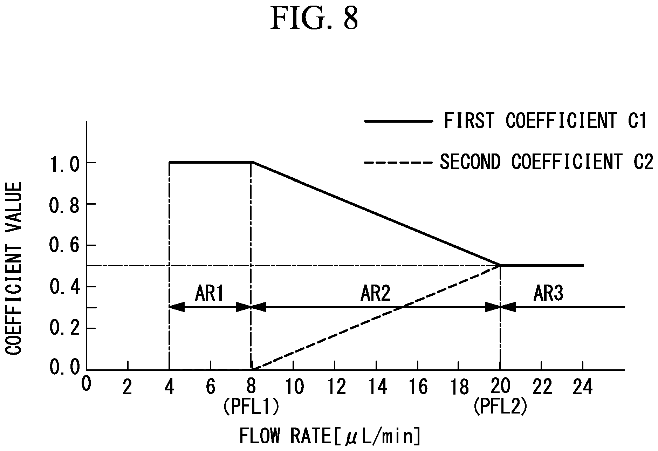

Fig. 8 is a graph illustrating a relationship between the liquid flow rate calculated by the calculation unit 27 and the first coefficient C1 and the second coefficient C2 used in the calculation formulae (1), (2), and (3). As illustrated in Fig. 8, when the flow rate calculated by the calculation unit 27 is in the first region AR1, the first coefficient C1 is fixed to 1, and the second coefficient C2 is fixed to 0. Further, when the flow rate calculated by the calculation unit 27 is in the third region AR3, the first coefficient C1 and the second coefficient C2 are fixed to 0.5, respectively.

However, when the flow rate calculated by the calculation unit 27 is in the second region AR2, the first coefficient C1 and the second coefficient C2 are greater than 0 and less than 1, respectively. The first coefficient C1 is gradually increased at a constant increase rate as the liquid flow rate calculated by the calculation unit 27 decreases from the second predetermined flow rate PFL2 (20 [μL/min] in Fig. 8) to the first predetermined flow rate PFL1 (8 [μL/min] in Fig. 8). The second coefficient C2 is gradually reduced at a constant reduction rate as the liquid flow rate calculated by the calculation unit 27 decreases from the second predetermined flow rate PFL2 to the first predetermined flow rate PFL1.

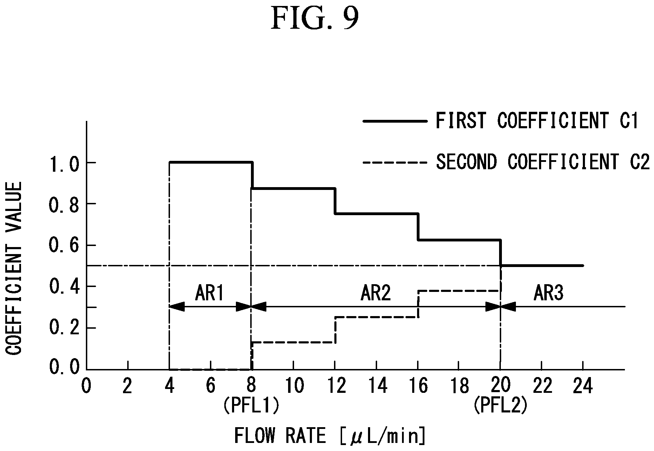

Note that, in Fig. 8, the first coefficient C1 and the second coefficient C2 applied when the flow rate calculated by the calculation unit 27 is in the second region AR2 may be values of other modified examples. Fig. 9 is a graph illustrating a modified example of the relationship between the liquid flow rate calculated by the calculation unit 27 and the first coefficient C1 and the second coefficient C2 used in the calculation formulae. As illustrated in Fig. 9, when the flow rate calculated by the calculation unit 27 is in the second region AR2, the first coefficient C1 may be increased stepwise as the liquid flow rate calculated by the calculation unit 27 decreases from the second predetermined flow rate PFL2 to the first predetermined flow rate PFL1. The second coefficient C2 may be reduced stepwise as the liquid flow rate calculated by the calculation unit 27 decreases from the second predetermined flow rate PFL2 to the first predetermined flow rate PFL1.

As described above, when the first flow rate FL1 is greater than the first predetermined flow rate PFL1, the calculation unit 27 calculates the liquid flow rate based on both the first reach time T1 and the second reach time T2 in step S110 and step S111. However, when the liquid flow rate is less than or equal to the first predetermined flow rate PFL1, the calculation unit 27 calculates the liquid flow rate based on the first reach time T1 without using the second reach time T2.

When the first flow rate FL1 is greater than the first predetermined flow rate PFL1, the calculation unit 27 calculates the liquid flow rate FL by applying predetermined weights to the first flow rate FL1 calculated based on the first reach time T1 and the second flow rate FL2 calculated based on the second reach time T2, and when the first flow rate FL1 is less than or equal to the first predetermined flow rate PFL1, the calculation unit 27 calculates the liquid flow rate FL by increasing the weight on the first flow rate FL1 to be greater than the predetermined weight.

Further, when the first flow rate FL1 is greater than the second predetermined flow rate PFL2, which is greater than the first predetermined flow rate PFL1, the calculation unit 27 calculates the liquid flow rate by applying an equal weight to the first flow rate FL1 calculated based on the first reach time T1 and the second flow rate FL2 calculated based on the second reach time T2. However, when the first flow rate FL1 is greater than the first predetermined flow rate PFL1 and less than or equal to the second predetermined flow rate PFL2, the calculation unit 27 calculates the liquid flow rate FL by increasing the weight on the first flow rate FL1 to be greater than the weight on the second flow rate FL2.

The effects and advantages achieved by the thermal flow meter 100 of the present embodiment described above will be described.

According to the thermal flow meter 100 of the present embodiment, when the liquid flow rate is greater than the first predetermined flow rate PFL1, the liquid flow rate FL is calculated based on both the first reach time T1 and the second reach time T2. Thus, the error in calculation of the flow rate FL can be reduced compared to a case where the flow rate is calculated without the use of either one of the first reach time T1 and the second reach time T2.

Further, according to the thermal flow meter 100 of the present embodiment, when the liquid flow rate FL is less than or equal to the first predetermined flow rate PFL1, the liquid flow rate FL is calculated based on the first reach time T1 without the use of the second reach time T2. Thus, the calculation error of the liquid flow rate FL due to heat applied to a liquid from the heating resistance wire 12a being transferred to the measurement tube 11 or the liquid itself before reaching the second temperature detecting resistance wire 12d can be reduced, and the measurable flow rate range can be expanded on the lower limit value side.

According to the thermal flow meter 100 of the present embodiment, when the liquid flow rate is greater than the second predetermined flow rate PFL2, the liquid flow rate FL is calculated with an equal weight being applied to the first flow rate FL1 calculated based on the first reach time T1 and the second flow rate FL2 calculated based on the second reach time T2. Thus, the error in calculation of the flow rate FL can be reduced compared to a case where the flow rate FL is calculated based only on either one of the first flow rate FL1 calculated based on the first reach time T1 and the second flow rate FL2 calculated based on the second reach time T2.

Further, according to the thermal flow meter 100 of the present embodiment, when the liquid flow rate is greater than the first predetermined flow rate PFL1 and less than or equal to the second predetermined flow rate PFL2, the liquid flow rate FL is calculated with the weight on the first flow rate FL1 being increased to be greater than the weight on the second flow rate FL2. Thus, the calculation error of the liquid flow rate due to heat applied to a liquid from the heating resistance wire 12a being transferred to the measurement tube 11 or the liquid itself before reaching the second temperature detecting resistance wire 12d can be reduced.

According to the thermal flow meter 100 of the present embodiment, the first coefficient C1 is increased and the second coefficient C2 is reduced as the liquid flow rate FL calculated by the calculation unit 27 decreases and is closer to the first predetermined flow rate PFL1 from the second predetermined flow rate PFL2, and thus, the calculation error of the liquid flow rate due to heat applied to a liquid from the heating resistance wire 12a being transferred to the measurement tube 11 or the liquid itself before reaching the second temperature detecting resistance wire 12d can be reduced in accordance with a reduction in the flow rate FL.

According to the thermal flow meter 100 of the present embodiment, the first coefficient C1 is gradually increased at a constant increase rate and the second coefficient C2 is gradually reduced at a constant reduction rate as the liquid flow rate FL calculated by the calculation unit 27 decreases and is closer to the first predetermined flow rate PFL1 from the second predetermined flow rate PFL2, and thus, fluctuation in the calculation result of the flow rate FL can be suitably suppressed.

**Claims**

1. A thermal flow meter (100) comprising:

   a measurement tube (11) having an inlet and an outlet, a liquid flowing in the inlet and the liquid, which flowed in from the inlet, flowing out of the outlet, and having an internal flow passage extending along an axis formed in the measurement tube;
   a temperature detection substrate (12) having a heating resistance element (12a), a first temperature detecting resistance element (12b), and a second temperature detecting resistance element (12d) that are formed on a detection surface, each extend in a flow direction from the inlet to the outlet, and are spaced apart from each other; and
   a voltage output unit (25) configured to output a voltage signal to the temperature detection substrate (12), the voltage signal being for heating the heating resistance element (12a);
   a voltage detection unit (21, 22) configured to determine a first output voltage in accordance with a temperature of the first temperature detecting resistance element (12b) and a second output voltage in accordance with a temperature of the second temperature detecting resistance element (12d);
   a time measurement unit (26) configured to measure a first reach time based on the voltage signal and the first output voltage and measure a second reach time based on the voltage signal and the second output voltage, the first reach time being a time taken by a liquid heated by the heating resistance element (12a) to reach the first temperature detecting resistance element (12b), and the second reach time being a time taken by a liquid heated by the heating resistance element (12a) to reach the second temperature detecting resistance element (12d); and

a calculation unit (27) configured to calculate a liquid flow rate of a liquid flowing through the measurement tube (11) based on the first reach time and the second reach time,

wherein the calculation unit (27) calculates the liquid flow rate based on both the first reach time and the second reach time when the liquid flow rate is greater than a first predetermined flow rate, and the calculation unit (27) calculates the liquid flow rate based on the first reach time without using the second reach time when the liquid flow rate is less than or equal to the first predetermined flow rate.

2. The thermal flow meter (100) according to claim 1, wherein the calculation unit (27) calculates a liquid flow rate by applying an equal weight to a first flow rate calculated based on the first reach time and to a second flow rate calculated based on the second reach time when the liquid flow rate is greater than a second predetermined flow rate, which is greater than the first predetermined flow rate, and the calculation unit (27) calculates a liquid flow rate by increasing a weight on the first flow rate to be greater than a weight on the second flow rate when the liquid flow rate is greater than the first predetermined flow rate and less than or equal to the second predetermined flow rate.

3. The thermal flow meter (100) according to claim 2, wherein as the liquid flow rate calculated by the calculation unit (27) decreases from the second predetermined flow rate to the first predetermined flow rate, the calculation unit (27) calculates the liquid flow rate by gradually increasing the weight on the first flow rate at a constant increase rate and by gradually reducing the weight on the second flow rate at a constant reduction rate.

4. The thermal flow meter (100) according to claim 1, wherein the calculation unit (27) calculates the liquid flow rate by applying predetermined weights to a first flow rate calculated based on the first reach time and to a second flow rate calculated based on the second reach time when a liquid flow rate is greater than the first predetermined flow rate, and the calculation unit (27) calculates the liquid flow rate by increasing a weight on the first flow rate to be greater than the predetermined weights when the liquid flow rate is less than or equal to the first predetermined flow rate.

5. A flow rate calculation method for calculating a liquid flow rate by a thermal flow meter (100), wherein the thermal flow meter (100) comprises

a measurement tube (11) having an inlet and an outlet, a liquid flowing in the inlet and the liquid, which flowed in from the inlet, flowing out of the outlet, and having an internal flow passage extending along an axis formed in the measurement tube (11),

a temperature detection substrate (12) having a heating resistance element (12a), a first temperature detecting resistance element (12b), and a second temperature detecting resistance element (12d) that are formed on a detection surface, each extend in a flow direction from the inlet to the outlet, and are spaced apart from each other,

a voltage output unit (25) configured to output a voltage signal to the temperature detection substrate (12), the voltage signal being for heating the heating resistance element (12a), and

a voltage detection unit (21, 22) configured to determine a first output voltage in accordance with a temperature of the first temperature detecting resistance element (12b) and a second output voltage in accordance with a temperature of the second temperature detecting resistance element (12d),

the flow rate calculation method comprising:

a time measurement step (S103) of measuring a first reach time based on the voltage signal and the first output voltage and measuring a second reach time based on the voltage signal and the second output voltage, the first reach time being a time taken by a liquid heated by the heating resistance element (12a) to reach the first temperature detecting resistance element (12b), and the second reach time being a time taken by a liquid heated by the heating resistance element (12a) to reach the second temperature detecting resistance element (12d); and

a calculation step (S108, S110, S111) of calculating a liquid flow rate of a liquid flowing through the measurement tube (11) based on the first reach time and the second reach time,

wherein the calculation step includes calculating the liquid flow rate based on both the first reach time and the second reach time when the liquid flow rate is greater than a first predetermined flow rate and calculating the liquid flow rate based on the first reach time without using the second reach time when the liquid flow rate is less than or equal to the first predetermined flow rate.

6. The flow rate calculation method according to claim 5, wherein the calculation step includes calculating the liquid flow rate by applying predetermined weights to a first flow rate calculated based on the first reach time and to a second flow rate calculated based on the second reach time when a liquid flow rate is greater than the first predetermined flow rate and calculating the liquid flow rate by increasing a weight on the first flow rate to be greater than the predetermined weights when the liquid flow rate is less than or equal to the first predetermined flow rate.

FIG. 1

# FIG. 2

# FIG. 3

# FIG. 4

# FIG. 5

# FIG. 6

# FIG. 7

```
                    ┌─────────────┐
                    │    START    │
                    └──────┬──────┘
                           │
              ┌────────────▼────────────┐
              │     OUTPUT VOLTAGE      │
              │  SIGNAL TO HEATING      │─── S101
              │   RESISTANCE WIRE       │
              └────────────┬────────────┘
                           │
              ┌────────────▼────────────┐
              │    DETERMINE FIRST      │
              │   TO FOURTH OUTPUT      │─── S102
              │       VOLTAGE           │
              └────────────┬────────────┘
                           │
        ┌──────────────────┼───────────────────────┐
        │                                           │
┌───────▼────────┐                          ┌───────▼────────┐
│ CALCULATE FIRST│                          │ CALCULATE SECOND│
│ REACH TIME T1  │─── S103          S105 ───│ REACH TIME T2   │
└───────┬────────┘                          └───────┬─────────┘
        │                                           │
┌───────▼────────┐                          ┌───────▼─────────┐
│ CALCULATE FIRST│                          │ CALCULATE SECOND│
│ FLOW RATE FL1  │─── S104          S106 ───│ FLOW RATE FL2   │
└───────┬────────┘                          └───────┬─────────┘
        │◄──────────────────────────────────────────┘
```

S107 — FIRST FLOW RATE FL1 $\leq$ FIRST PREDETERMINED FLOW RATE? — NO

S109 — FIRST FLOW RATE FL1 $\leq$ SECOND PREDETERMINED FLOW RATE? — NO

YES

S108 — CALCULATE LIQUID FLOW RATE BY CALCULATION FORMULA (1)

YES

S110 — CALCULATE LIQUID FLOW RATE BY CALCULATION FORMULA (2)

S111 — CALCULATE LIQUID FLOW RATE BY CALCULATION FORMULA (3)

```
                    ┌─────────────┐
                    │     END     │
                    └─────────────┘
```

# FIG. 8

# FIG. 9

Europäisches
Patentamt

European
Patent Office

Office européen
des brevets

# EUROPEAN SEARCH REPORT

**Application Number**

EP 25 15 9664

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 223 593 B1 (KUBISIAK DAVID [US] ET AL) 1 May 2001 (2001-05-01) | 1,5 | INV. G01F1/692 |
| A | * figures 4,5 * <br> * column 9, line 21 - line 37; figure 7 * | 2-4,6 | |
| A | US 2016/011028 A1 (SKARPING GUNNAR [SE] ET AL) 14 January 2016 (2016-01-14) <br> * paragraph [0058]; figure 4 * | 1-6 | |
| A | US 2021/262843 A1 (ABO KAZUO [JP] ET AL) 26 August 2021 (2021-08-26) <br> * figures 1,2 * | 1-6 | |

**TECHNICAL FIELDS SEARCHED (IPC)**

G01F

The present search report has been drawn up for all claims

| Place of search | Date of completion of the search | Examiner |
|---|---|---|
| The Hague | 25 June 2025 | Quertemont, Eric |

EPO FORM 1503 03.82 (P04C01)

## ANNEX TO THE EUROPEAN SEARCH REPORT
## ON EUROPEAN PATENT APPLICATION NO.

EP 25 15 9664

This annex lists the patent family members relating to the patent documents cited in the above-mentioned European search report.
The members are as contained in the European Patent Office EDP file on
The European Patent Office is in no way liable for these particulars which are merely given for the purpose of information.

25-06-2025

| Patent document cited in search report | | Publication date | Patent family member(s) | | Publication date |
|---|---|---|---|---|---|
| US 6223593 | B1 | 01-05-2001 | CA | 2317134 A1 | 08-07-1999 |
| | | | CN | 1290341 A | 04-04-2001 |
| | | | CN | 1611932 A | 04-05-2005 |
| | | | CN | 1611933 A | 04-05-2005 |
| | | | DE | 69830337 T2 | 16-03-2006 |
| | | | EP | 1044355 A1 | 18-10-2000 |
| | | | JP | 2002500346 A | 08-01-2002 |
| | | | US | 6223593 B1 | 01-05-2001 |
| | | | WO | 9934175 A1 | 08-07-1999 |
| US 2016011028 | A1 | 14-01-2016 | BR | 112015018170 A2 | 18-07-2017 |
| | | | CA | 2899850 A1 | 14-08-2014 |
| | | | EP | 2954293 A1 | 16-12-2015 |
| | | | JP | 6401717 B2 | 10-10-2018 |
| | | | JP | 2016507064 A | 07-03-2016 |
| | | | KR | 20150132124 A | 25-11-2015 |
| | | | US | 2016011028 A1 | 14-01-2016 |
| | | | WO | 2014123481 A1 | 14-08-2014 |
| US 2021262843 | A1 | 26-08-2021 | EP | 3869166 A1 | 25-08-2021 |
| | | | JP | 2021131323 A | 09-09-2021 |
| | | | KR | 20210106359 A | 30-08-2021 |
| | | | US | 2021262843 A1 | 26-08-2021 |

EPO FORM P0459

For more details about this annex : see Official Journal of the European Patent Office, No. 12/82

**EP 4 614 116 A1**

## REFERENCES CITED IN THE DESCRIPTION

### Patent documents cited in the description

- JP 2021131323 A